# EUROPEAN PATENT APPLICATION

(11) **EP 4 601 321 A1**
(43) Date of publication of application: **13.08.2025**
(21) Application number: 24843719.6
(22) Date of filing: 26.08.2024
(51) Int. Cl.: H04R 1/10

(54) **BLUETOOTH DUAL PLAYBACK MODE SETTING METHOD AND DEVICE**

(30) Priority: 21.12.2023 CN 202311775028
(71) Applicant: Yealink (Xiamen) Network Technology Co., Ltd., Xiamen City, Fujian 361009 (CN)
(72) Inventor: LIN, Zhipeng, Xiamen, Fujian 361009 (CN)
(74) Representative: Meyer, Thorsten
(86) International application number: PCT/CN2024/114409
(87) International publication number: WO 2025/130116

(57) **Abstract**

The present disclosure provides a method and device for setting a Bluetooth dual-playing mode. The present disclosure is applied to a single-Bluetooth-chip device. When an external device establishes a connection to the single-Bluetooth-chip device, and when it is determined that a connection object of the external device is a workstation (WS) module, the WS module is controlled to receive first transmission data sent by the external device. When it is determined that the connection object of the external device is an earphone module, the earphone module is controlled to receive second transmission data sent by the external device. A playing mode of the single-Bluetooth-chip device is determined based on an establishment status of a communication channel between the WS module and the earphone module. The playing mode includes hands-free playing through the WS module or earphone playing through the earphone module. The present disclosure solves a problem of poor working stability of a device because the prior art cannot use a single Bluetooth chip to implement switching between dual playing modes.

## Description

### CROSS-REFERENCE TO RELATED APPLICATIONS

The present application claims the benefit of Chinese Patent Application No. 202311775028.8 filed on Dec. 21, 2023, the contents of which are hereby incorporated by reference.

### TECHNICAL FIELD

The present disclosure relates to the technical field of intelligent devices, and in particular, to a method and device for setting a Bluetooth dual-playing mode.

### BACKGROUND

With the rapid development of science and technology, people's living standard is constantly improving, and Bluetooth devices are used more widely. A long-distance communication capability of a single-Bluetooth-chip device has also facilitated people's daily life and work.

With the continuous development of the Bluetooth devices, a Bluetooth combination device of a workstation (WS) and a Bluetooth earphone gradually appears in people's work and life. However, the existing Bluetooth combination device can only be used by a single person, and there is an increasing demand for using the Bluetooth combination device for a multi-person meeting.

Among commonly-used Bluetooth combination technologies, the WS uses a single Bluetooth chip to send and receive data only through an earphone soundtrack, or the WS uses dual Bluetooth chips to achieve dual playing modes: earphone playing mode and hands-free playing mode. However, the use of the dual Bluetooth chips will result in poor working stability of the device and increase a production cost.

### SUMMARY

In response to the above problems, the present disclosure provides a method and device for setting a Bluetooth dual-playing mode, which solve a problem of poor working stability of a device because the prior art cannot use a single Bluetooth chip to implement switching between dual playing modes.

To achieve the above objective, an embodiment of the present disclosure provides a method for setting a Bluetooth dual-playing mode, applied to a single-Bluetooth-chip device including a WS module and an earphone module, and including:
when an external establishes a connection to the single-Bluetooth-chip device, determining a connection object of the external device; and
controlling, when determining that the connection object of the external device is the WS module, the WS module to receive first transmission data sent by the external device, and determining a playing mode of the single-Bluetooth-chip device based on an establishment status of a communication channel between the WS module and the earphone module, where the first transmission data includes first peripheral transmission data and first earphone transmission data, and the playing module includes hands-free playing through the WS module or earphone playing through the earphone module; or
controlling, when determining that the connection object of the external device is the earphone module, the earphone module to receive second transmission data sent by the external device, and determining a playing mode of the single-Bluetooth-chip device based on an establishment status of a communication channel between the WS module and the earphone module, where the second transmission data includes second peripheral transmission data and second earphone transmission data, the second peripheral transmission data includes third transmission data and fourth transmission data, and the playing mode includes hands-free playing through the WS module or earphone playing through the earphone module.

The method for setting a Bluetooth dual-playing mode in this embodiment of the present disclosure determines a module connection through a single Bluetooth chip, adopts different playing modes, and achieves flexible switching between dual playing modes. In this way, there is no need for dual Bluetooth chips to perform information exchange, and a fault tolerance of signal communication is increased, such that a device works in a stable state, greatly improving working stability of the device.

Further, the controlling, when determining that the connection object of the external device is the WS module, the WS module to receive first transmission data sent by the external device, and determining a playing mode of the single-Bluetooth-chip device based on an establishment status of a communication channel between the WS module and the earphone module is specifically as follows: determining, when determining that no WS-earphone communication channel is established between the WS module and the earphone module, the playing mode of the single-Bluetooth-chip device as the hands-free playing through the WS module; or
determining, when determining that a WS-earphone communication channel is established between the WS module and the earphone module, the playing mode of the single-Bluetooth-chip device as the earphone playing through the earphone module.

Further, the determining, when determining that no WS-earphone communication channel is established between the WS module and the earphone module, the playing mode of the single-Bluetooth-chip device as the hands-free playing through the WS module is specifically as follows:
when determining that the hands-free playing is performed through the WS module, receiving, by the WS module, the first peripheral transmission data of the external device through a WS-peripheral communication channel; and
sending first sound pickup data processed by the WS module to the external device through the WS-peripheral communication channel.

Further, the determining, when determining that a WS-earphone communication channel is established between the WS module and the earphone module, the playing mode of the single-Bluetooth-chip device as the earphone playing through the earphone module is specifically as follows:
when determining that the earphone playing is performed through the earphone module, receiving, by the WS module, the first earphone transmission data of the external device through a WS-peripheral communication channel, and then sending the first earphone transmission data to the earphone module through the WS-earphone communication channel; and
receiving, by the WS module through the WS-earphone communication channel, second sound pickup data processed by the earphone module, and then forwarding the second sound pickup data to the external device through the WS-peripheral communication channel.

Further, the controlling, when determining that the connection object of the external device is the earphone module, the earphone module to receive second transmission data sent by the external device, and determining a playing mode of the single-Bluetooth-chip device based on an establishment status of a communication channel between the WS module and the earphone module is specifically as follows:
determining, when determining that no WS-earphone communication channel is established between the WS module and the earphone module, the playing mode of the single-Bluetooth-chip device as the earphone playing through the earphone module; or
determining, when determining that a WS-earphone communication channel is established between the WS module and the earphone module, the playing mode of the single-Bluetooth-chip device as the hands-free playing through the WS module.

Further, the determining, when determining that no WS-earphone communication channel is established between the WS module and the earphone module, the playing mode of the single-Bluetooth-chip device as the earphone playing through the earphone module is specifically as follows:
when determining that the earphone playing is performed through the earphone module,
receiving, by the earphone module, the second earphone transmission data of the external device through an earphone-peripheral communication channel; and
sending third sound pickup data processed by the earphone module to the external device through the earphone-peripheral communication channel.

Further, the determining, when determining that a WS-earphone communication channel is established between the WS module and the earphone module, the playing mode of the single-Bluetooth-chip device as the hands-free playing through the WS module is specifically as follows:
when determining that the hands-free playing is performed through the WS module, determining a communication mode between the WS module and the earphone module based on a channel type of the WS-earphone communication channel, where the communication mode includes a wired forwarding working mode and a wireless forwarding working mode; and
controlling, when determining that the channel type is a wired forwarding channel, the earphone module to receive the third transmission data sent by the external device and enter the wired forwarding working mode, where the third transmission data includes third peripheral transmission data; or
controlling, when determining that the channel type is a wireless forwarding channel, the earphone module to receive the fourth transmission data sent by the external device and enter the wireless forwarding working mode, where the fourth transmission data includes fourth peripheral transmission data.

The method for setting a Bluetooth dual-playing mode in this embodiment of the present disclosure can adopt two data transmission modes: wired transmission and wireless transmission. Both a wired forwarding scheme and a wireless forwarding scheme can be used separately or in combination, depending on a requirement of a product application. Wired forwarding is mainly used to improve transmission stability, while wireless forwarding is mainly used for common wireless needs.

Further, the controlling, determining that the channel type is a wired forwarding channel, the earphone module to receive the third transmission data sent by the external device and enter the wired forwarding working mode is specifically as follows:
when the earphone module enters the wired forwarding working mode, receiving, by the earphone module, the third peripheral transmission data of the external device through an earphone-peripheral communication channel, and then forwarding the third peripheral transmission data to the WS module through the wired transmission; and
receiving, by the earphone module through the wired transmission, fourth sound pickup data processed by the WS module, and then forwarding the fourth sound pickup data to the external device through the earphone-peripheral communication channel.

Further, the controlling, when determining that the channel type is a wireless forwarding channel, the earphone module to receive the fourth transmission data sent by the external device and enter the wireless forwarding working mode is specifically as follows:
when the earphone module enters the wireless forwarding working mode, receiving, by the earphone module, the fourth peripheral transmission data of the external device through an earphone-peripheral communication channel, and then forwarding the fourth peripheral transmission data to the WS module through the wireless transmission; and
receiving, by the earphone module through the wireless transmission, fifth sound pickup data processed by the WS module, and then forwarding the fifth sound pickup data to the external device through the earphone-peripheral communication channel.

An embodiment of the present disclosure further provides a device for setting a Bluetooth dual-playing mode, including:
a WS module, an earphone module, and an external device, where
the WS module, the earphone module, and the external device are connected and combined to enable the device for setting a Bluetooth dual-playing mode to execute the method for setting a Bluetooth dual-playing mode according to any one of claims 1 to 9.

The device for setting a Bluetooth dual-playing mode in this embodiment of the present disclosure can implement a method for setting a Bluetooth dual-playing mode, which is suitable for a single-Bluetooth-chip device. Through a single Bluetooth chip, data is transmitted between the modules to achieve switching between dual playing modes in a plurality of working modes, thereby eliminating instability of data exchange between dual Bluetooth chips and improving working stability of the device for setting a Bluetooth dual-playing mode.

### BRIEF DESCRIPTION OF THE DRAWINGS

FIG. 1 is a flowchart of a method for setting a Bluetooth dual-playing mode according to an embodiment of the present disclosure;
FIG. 2 shows modules of a device for setting a Bluetooth dual-playing mode according to an embodiment of the present disclosure;
FIG. 3 is a structural diagram of performing hands-free playing by a WS module (a mode in which an external device is connected to the WS module) according to an embodiment of the present disclosure;
FIG. 4 is a structural diagram of performing earphone playing by an earphone module (a mode in which an external device is connected to a WS module) according to an embodiment of the present disclosure;
FIG. 5 is a structural diagram of performing earphone playing by an earphone module (a mode in which an external device is connected to the earphone module) according to an embodiment of the present disclosure;
FIG. 6 is a structural diagram of performing hands-free playing by a WS module (a wired forwarding working mode) according to an embodiment of the present disclosure;
FIG. 7 is a structural diagram of performing hands-free playing by a WS module (a wireless forwarding working mode) according to an embodiment of the present disclosure;
FIG. 8 is a structural diagram of performing hands-free playing by a device for setting a Bluetooth dual-playing mode (a mode in which an external device is connected to a WS module) according to an embodiment of the present disclosure;
FIG. 9 is a structural diagram of performing earphone playing by a device for setting a Bluetooth dual-playing mode (a mode in which an external device is connected to a WS module) according to an embodiment of the present disclosure;
FIG. 10 is a structural diagram of performing earphone playing by a device for setting a Bluetooth dual-playing mode (a mode in which an external device is connected to an earphone module) according to an embodiment of the present disclosure;
FIG. 11 is a structural diagram of performing hands-free playing by a device for setting a Bluetooth dual-playing mode (a wired forwarding working mode) according to an embodiment of the present disclosure; and
FIG. 12 is a structural diagram of performing hands-free playing by a device for setting a Bluetooth dual-playing mode (a wireless forwarding working mode) according to an embodiment of the present disclosure.

### DETAILED DESCRIPTION

The technical solutions of the embodiments of the present disclosure are clearly and completely described below with reference to the accompanying drawings in the embodiments of the present disclosure. Apparently, the described embodiments are merely a part rather than all of the embodiments of the present disclosure. All other embodiments obtained by a person of ordinary skill in the art based on the embodiments of the present disclosure without creative efforts shall fall within the protection scope of the present disclosure.

### Embodiment 1

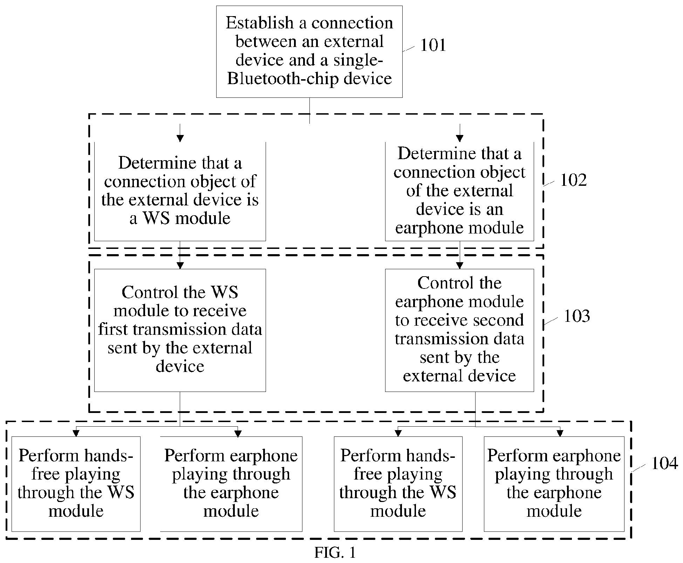

FIG. 1 is a flowchart of a method for setting a Bluetooth dual-playing mode according to an embodiment of the present disclosure. As shown in FIG. 1, this embodiment of the present disclosure is applied to a single-Bluetooth-chip device. The single-Bluetooth-chip device includes a WS module and an earphone module. This embodiment of the present disclosure includes steps 101 to 104, and each step is specifically described as follows:
Step 101: When an external device establishes a connection to the single-Bluetooth-chip device, determine a connection object of the external device.
Step 102: When determining that the connection object of the external device is the WS module, control the WS module to receive first transmission data sent by the external device, and determine a playing mode of the single-Bluetooth-chip device based on an establishment status of a communication channel between the WS module and the earphone module, where the first transmission data includes first peripheral transmission data and first earphone transmission data.

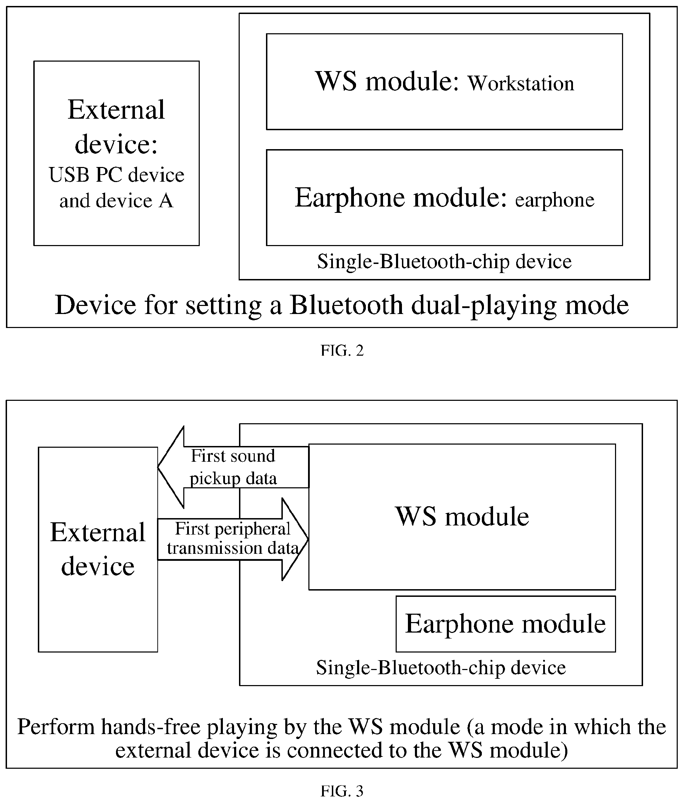

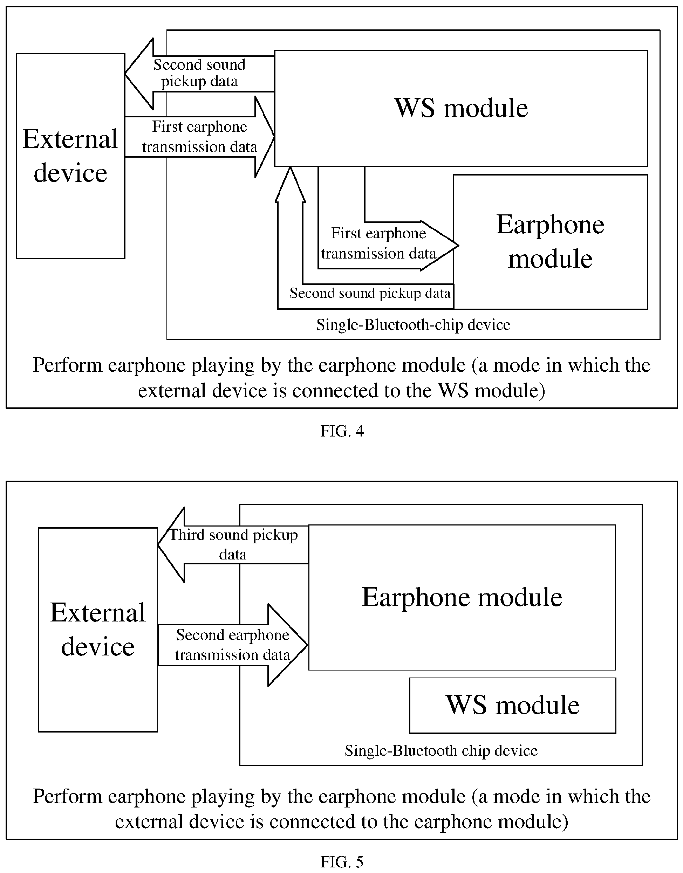

As an example of this embodiment, FIG. 3 is a structural diagram of performing hands-free playing by the WS module (a mode in which the external device is connected to the WS module) according to an embodiment of the present disclosure. As shown in FIG. 3, when it is determined that no WS-earphone communication channel is established between the WS module and the earphone module, the first peripheral transmission data of the external device is sent to the WS module through a WS-peripheral communication channel. First sound pickup data processed by the WS module is sent to the external device through the WS-peripheral communication channel. FIG. 4 is a structural diagram of performing earphone playing by the earphone module (the mode in which the external device is connected to the WS module) according to an embodiment of the present disclosure. As shown in FIG. 4, when it is determined that a WS-earphone communication channel is established between the WS module and the earphone module, the first earphone transmission data of the external device is sent to the WS module through the WS-peripheral communication channel and then sent to the earphone module through the WS-earphone communication channel. Second sound pickup data processed by the earphone module is sent to the WS module through the WS-earphone communication channel and then forwarded to the external device through the WS-peripheral communication channel. As a working base station that can be directly connected through a universal serial bus (USB) port, the WS module may be used in conjunction with a Bluetooth earphone as a wireless extension when the Bluetooth earphone is directly connected to a computer. A function of the WS module is similar to that of a mobile phone or a dongle. Further, the WS module may alternatively be separately used as a USB playing device.

Step 103: When determining that the connection object of the external device is the earphone module, control the earphone module to receive second transmission data sent by the external device, and determine the playing mode of the single-Bluetooth-chip device based on the establishment status of the communication channel between the WS module and the earphone module, where the second transmission data includes second peripheral transmission data and second earphone transmission data, and the second peripheral transmission data includes third transmission data and fourth transmission data.

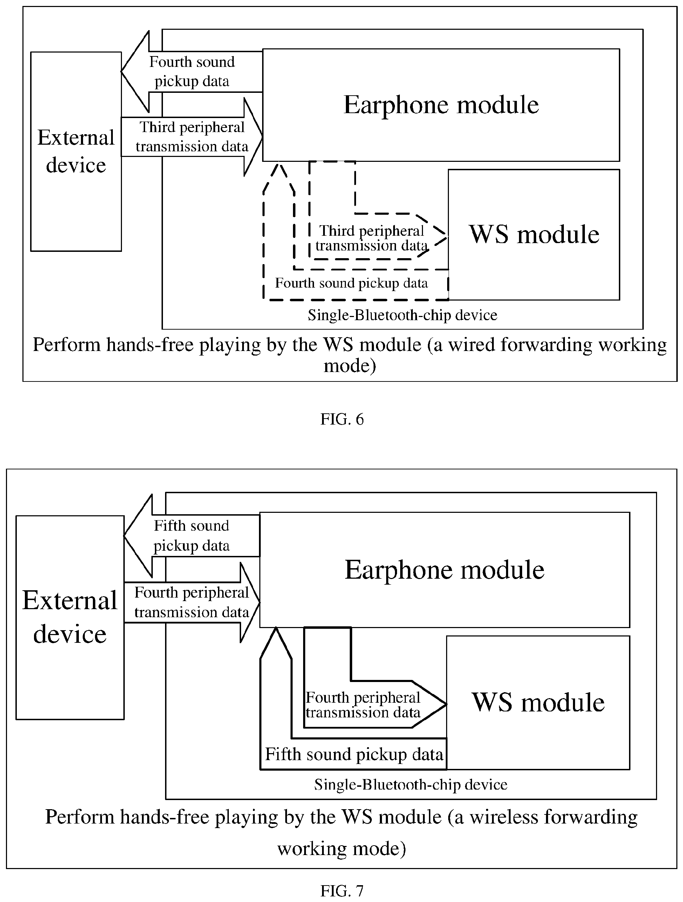

As an example of this embodiment, FIG. 5 is a structural diagram of performing the earphone playing by the earphone module (a mode in which the external device is connected to the earphone module) according to an embodiment of the present disclosure. As shown in FIG. 5, when it is determined that no WS-earphone communication channel is established between the WS module and the earphone module, the second earphone transmission data of the external device is sent to the earphone module through an earphone-peripheral communication channel. Third sound pickup data obtained through the processing by the earphone module is sent to the external device through the earphone-peripheral communication channel. FIG. 6 is a structural diagram of performing the hands-free playing by the WS module (a wired forwarding working mode) according to an embodiment of the present disclosure. As shown in FIG. 6, when it is determined that the WS-earphone communication channel is established between the WS module and the earphone module, and when it is determined that a channel type of the WS-earphone communication channel is a wired forwarding channel, the earphone module is controlled to receive the third transmission data sent by the external device and enter the wired forwarding working mode. The third transmission data includes third peripheral transmission data. The third peripheral transmission data of the external device is sent to the earphone module through the earphone-peripheral communication channel and then forwarded to the WS module through wired transmission. Fourth sound pickup data obtained through the processing by the WS module is sent to the earphone module through the wired transmission and then forwarded to the external device through the earphone-peripheral communication channel. FIG. 7 is a structural diagram of performing the hands-free playing by the WS module (a wireless forwarding working mode) according to an embodiment of the present disclosure. As shown in FIG. 7, when it is determined that the WS-earphone communication channel is established between the WS module and the earphone module, and when it is determined that the channel type of the WS-earphone communication channel is a wireless forwarding channel, the earphone module is controlled to receive the fourth transmission data sent by the external device and enter the wireless forwarding working mode. The fourth transmission data includes fourth peripheral transmission data. The fourth peripheral transmission data of the external device is sent to the earphone module through the earphone-peripheral communication channel and then forwarded to the WS module through wireless transmission. Fifth sound pickup data obtained through the processing by the WS module is sent to the earphone module through the wireless transmission and then forwarded to the external device through the earphone-peripheral communication channel.

The method for setting a Bluetooth dual-playing mode in this embodiment of the present disclosure can adopt two data transmission modes: the wired transmission and the wireless transmission. Both a wired forwarding scheme and a wireless forwarding scheme can be used separately or in combination, depending on a requirement of a product application. Wired forwarding is mainly used to improve transmission stability, while wireless forwarding is mainly used for common wireless needs.

Step 104: Perform the hands-free playing through the WS module or the earphone playing through the earphone module.

The method for setting a Bluetooth dual-playing mode in this embodiment of the present disclosure determines a module connection through a single Bluetooth chip, adopts different playing modes, and achieves flexible switching between dual playing modes. In this way, there is no need for dual Bluetooth chips to perform information exchange, and a fault tolerance of signal communication is increased, such that a device works in a stable state, greatly improving working stability of the device.

### Embodiment 2

FIG. 2 shows modules of a device for setting a Bluetooth dual-playing mode according to an embodiment of the present disclosure. As shown in FIG. 2, the device for setting a Bluetooth dual-playing mode in this embodiment of the present disclosure includes a WS module, an earphone module, and an external device. The WS module includes a WS, the earphone module includes an earphone, and the external device includes a USB personal computer (PC) device and a device A.

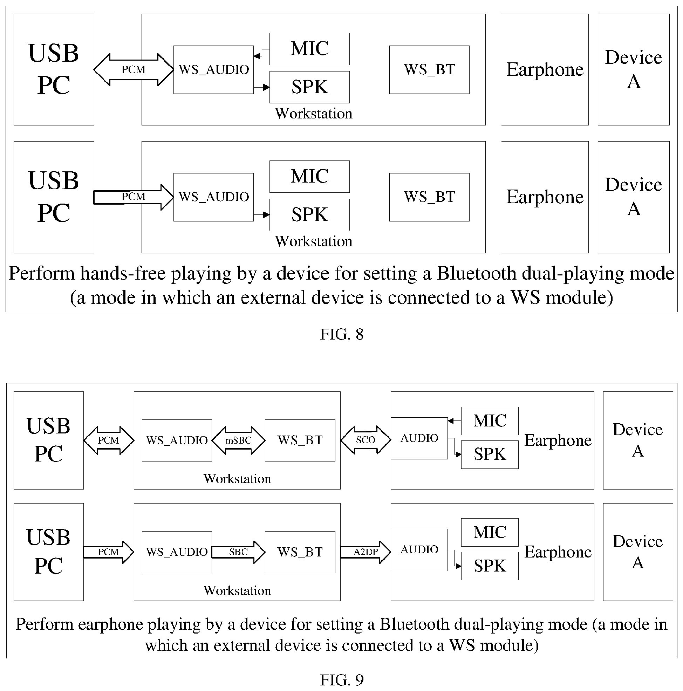

As an example of this embodiment, FIG. 8 is a structural diagram of performing hands-free playing by the device for setting a Bluetooth dual-playing mode (a mode in which the external device is connected to the WS module) according to an embodiment of the present disclosure. As shown in FIG. 8, when the WS is connected to the USB PC device to establish a pulse code modulation (PCM) communication channel, and the WS is not connected to the earphone, first peripheral transmission data is sent to a WS_AUDIO of the WS through the PCM communication channel to perform the hands-free playing through a speaker (SPK) of the WS. First sound pickup data processed by a microphone (MIC) of the WS is sent to the USB PC device through the PCM communication channel.

As another example of this embodiment, FIG. 9 is a structural diagram of performing earphone playing by the device for setting a Bluetooth dual-playing mode (the mode in which the external device is connected to the WS module) according to an embodiment of the present disclosure. As shown in FIG. 9, when the WS is connected to the USB PC device to establish the PCM communication channel, and the WS is connected to the earphone to establish a synchronous connection oriented link (SCO) communication channel and an advanced audio distribution profile (A2DP) communication channel, second peripheral transmission data is transmitted to the WS-AUDIO of the WS through the PCM communication channel, transmitted to a WS-BT through a modified subband coding (mSBC) or subband coding (SBC) channel inside the WS, and then sent to a SPK of the earphone through the SCO communication channel or the A2DP communication channel to perform the earphone playing. Second sound pickup data processed by a MIC of the earphone is sent to an AUDIO of the earphone, sent to the WS-BT of the WS through the SCO communication channel, transmitted to the WS-AUDIO through the internal mSBC channel, and then forwarded to the USB PC device through the PCM communication channel.

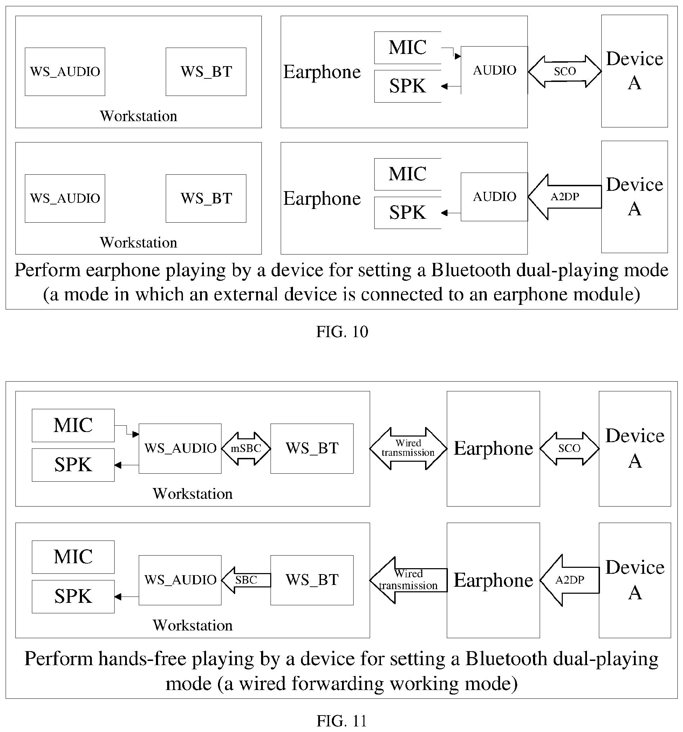

As another example of this embodiment, FIG. 10 is a structural diagram of performing the earphone playing by the device for setting a Bluetooth dual-playing mode (a mode in which the external device is connected to the earphone module) according to an embodiment of the present disclosure. As shown in FIG. 10, when neither the earphone nor the USB PC device is connected to the WS, the earphone is connected to the device A to establish the SCO communication channel and the A2DP communication channel. Second earphone transmission data is transmitted from the device A to the SPK of the earphone through the SCO communication channel or the A2DP communication channel to perform the earphone playing. Third sound pickup data obtained through the processing by the MIC of the earphone is sent to the AUDIO of the earphone and sent to the device A through the SCO communication channel.

As another example of this embodiment, FIG. 11 is a structural diagram of performing the hands-free playing by the device for setting a Bluetooth dual-playing mode (a wired forwarding working mode) according to an embodiment of the present disclosure. As shown in FIG. 11, when the WS is not connected to the USB PC device, and the WS is connected to the earphone to establish a wired transmission communication channel, the earphone is connected to the device A to establish the SCO communication channel and the A2DP communication channel, and it is determined that the wired forwarding working mode is entered. Third peripheral transmission data is transmitted by the device A to the earphone through the SCO communication channel or the A2DP communication channel. The third peripheral transmission data is forwarded by the earphone to the WS-BT (Bluetooth chip module of the WS) of the WS through the wired transmission communication channel, and then transmitted to the WS_AUDIO of the WS through the internal SBC or mSBC channel. Then the SPK of the WS performs the hands-free playing. Fourth sound pickup data obtained through the processing by the MIC of the WS is transmitted by the WS_AUDIO of the WS to the WS-BT through the internal mSBC channel, then forwarded to the earphone, and finally sent to the device A through the SCO communication channel.

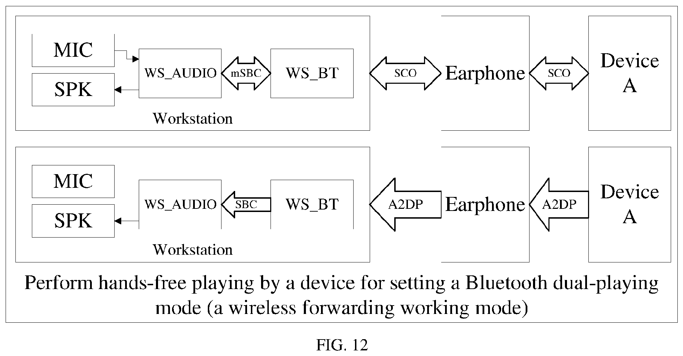

As another example of this embodiment, FIG. 12 is a structural diagram of performing the hands-free playing by the device for setting a Bluetooth dual-playing mode (a wireless forwarding working mode) according to an embodiment of the present disclosure. As shown in FIG. 12, when the WS is not connected to the USB PC device, and the WS is connected to the earphone to establish a wireless transmission communication channel, the earphone is connected to the device A to establish the SCO communication channel and the A2DP communication channel, and it is determined that the wireless forwarding working mode is entered. Fourth peripheral transmission data is transmitted by the device A to the earphone through the SCO communication channel or the A2DP communication channel. The fourth peripheral transmission data is forwarded by the earphone to the WS-BT of the WS through the wireless transmission communication channel, and then transmitted to the WS_AUDIO of the WS through the internal SBC or mSBC channel. Then the SPK of the WS performs the hands-free playing. Fifth sound pickup data obtained through the processing by the MIC of the WS is transmitted by the WS_AUDIO of the WS to the WS_BT through the internal mSBC channel, then forwarded to the earphone through the wireless transmission communication channel, and finally sent to the device A through the SCO communication channel.

In this embodiment of the present disclosure, the WS module and the earphone module each may be one or more processors, controllers, or chips that each have a communication interface, can realize a communication protocol, and may further include a memory, a related interface and system transmission bus, and the like if necessary. The processor, controller, or chip executes program-related code to realize a corresponding function.

The device for setting a Bluetooth dual-playing mode in this embodiment of the present disclosure can implement a method for setting a Bluetooth dual-playing mode, which is suitable for a single-Bluetooth-chip device. Through a single Bluetooth chip, data is transmitted between the modules to achieve switching between dual playing modes in a plurality of working modes, thereby eliminating instability of data exchange between dual Bluetooth chips and improving working stability of the device for setting a Bluetooth dual-playing mode.

The above described are preferred implementations of the present disclosure, and it should be noted that for those of ordinary skill in the art, various improvements and modifications may be made without departing from the technical principles of the present disclosure. These improvements and modifications should be regarded as falling within the protection scope of the present disclosure.

In the description of this specification, the description with reference to the terms such as "one embodiment", "some embodiments", "an example", "a specific example", or "some examples" means that the specific features, structures, materials, or characteristics described with reference to the embodiment or example are included in at least one embodiment or example of the present disclosure. Moreover, the specific features, structures, materials, or characteristics described may be combined in a suitable manner in any one or more embodiments or examples. In addition, those skilled in the art may combine different embodiments or examples described in this specification and characteristics of the different embodiments or examples without mutual contradiction.

In addition, the terms such as "first" and "second" are used only for descriptive purposes, and should not be construed as indicating or implying relative importance or implying a quantity of indicated technical features. Therefore, features defined by "first" and "second" may explicitly or implicitly include at least one of the features. In the description of the present disclosure, "a plurality of" means two or more, unless otherwise specifically defined.

## Claims

1. A method for setting a Bluetooth dual-playing mode, applied to a single-Bluetooth-chip device comprising a workstation (WS) module and an earphone module, and comprising:
when an external device establishes a connection to the single-Bluetooth-chip device, determining a connection object of the external device; and
controlling, when determining that the connection object of the external device is the WS module, the WS module to receive first transmission data sent by the external device, and determining a playing mode of the single-Bluetooth-chip device based on an establishment status of a communication channel between the WS module and the earphone module, wherein the first transmission data comprises first peripheral transmission data and first earphone transmission data; or
controlling, when determining that the connection object of the external device is the earphone module, the earphone module to receive second transmission data sent by the external device, and determining a playing mode of the single-Bluetooth-chip device based on an establishment status of a communication channel between the WS module and the earphone module, wherein the second transmission data comprises second peripheral transmission data and second earphone transmission data, the second peripheral transmission data comprises third transmission data and fourth transmission data, and the playing mode comprises hands-free playing through the WS module or earphone playing through the earphone module.

2. The method for setting a Bluetooth dual-playing mode according to claim 1, wherein the controlling, when determining that the connection object of the external device is the WS module, the WS module to receive first transmission data sent by the external device, and determining a playing mode of the single-Bluetooth-chip device based on an establishment status of a communication channel between the WS module and the earphone module is specifically as follows:
determining, when determining that no WS-earphone communication channel is established between the WS module and the earphone module, the playing mode of the single-Bluetooth-chip device as the hands-free playing through the WS module; or
determining, when determining that a WS-earphone communication channel is established between the WS module and the earphone module, the playing mode of the single-Bluetooth-chip device as the earphone playing through the earphone module.

3. The method for setting a Bluetooth dual-playing mode according to claim 2, wherein the determining, when determining that no WS-earphone communication channel is established between the WS module and the earphone module, the playing mode of the single-Bluetooth-chip device as the hands-free playing through the WS module is specifically as follows:
when determining that the hands-free playing is performed through the WS module, receiving, by the WS module, the first peripheral transmission data of the external device through a WS-peripheral communication channel; and
sending first sound pickup data processed by the WS module to the external device through the WS-peripheral communication channel.

4. The method for setting a Bluetooth dual-playing mode according to claim 2, wherein the determining, when determining that a WS-earphone communication channel is established between the WS module and the earphone module, the playing mode of the single-Bluetooth-chip device as the earphone playing through the earphone module is specifically as follows:
when determining that the earphone playing is performed through the earphone module, receiving, by the WS module, the first earphone transmission data of the external device through a WS-peripheral communication channel, and then sending the first earphone transmission data to the earphone module through the WS-earphone communication channel; and
receiving, by the WS module through the WS-earphone communication channel, second sound pickup data processed by the earphone module, and then forwarding the second sound pickup data to the external device through the WS-peripheral communication channel.

5. The method for setting a Bluetooth dual-playing mode according to claim **1,** wherein the controlling, when determining that the connection object of the external device is the earphone module, the earphone module to receive second transmission data sent by the external device, and determining a playing mode of the single-Bluetooth-chip device based on an establishment status of a communication channel between the WS module and the earphone module is specifically as follows:
determining, when determining that no WS-earphone communication channel is established between the WS module and the earphone module, the playing mode of the single-Bluetooth-chip device as the earphone playing through the earphone module; or
determining, when determining that a WS-earphone communication channel is established between the WS module and the earphone module, the playing mode of the single-Bluetooth-chip device as the hands-free playing through the WS module.

6. The method for setting a Bluetooth dual-playing mode according to claim 5, wherein the determining, when determining that no WS-earphone communication channel is established between the WS module and the earphone module, the playing mode of the single-Bluetooth-chip device as the earphone playing through the earphone module is specifically as follows:
when determining that the earphone playing is performed through the earphone module,
receiving, by the earphone module, the second earphone transmission data of the external device through an earphone-peripheral communication channel; and
sending third sound pickup data processed by the earphone module to the external device through the earphone-peripheral communication channel.

7. The method for setting a Bluetooth dual-playing mode according to claim 5, wherein the determining, when determining that a WS-earphone communication channel is established between the WS module and the earphone module, the playing mode of the single-Bluetooth-chip device as the hands-free playing through the WS module is specifically as follows:
when determining that the hands-free playing is performed through the WS module, determining a communication mode between the WS module and the earphone module based on a channel type of the WS-earphone communication channel, wherein the communication mode comprises a wired forwarding working mode and a wireless forwarding working mode; and
controlling, when determining that the channel type is a wired forwarding channel, the earphone module to receive the third transmission data sent by the external device and enter the wired forwarding working mode, wherein the third transmission data comprises third peripheral transmission data; or
controlling, when determining that the channel type is a wireless forwarding channel, the earphone module to receive the fourth transmission data sent by the external device and enter the wireless forwarding working mode, wherein the fourth transmission data comprises fourth peripheral transmission data.

8. The method for setting a Bluetooth dual-playing mode according to claim 7, wherein the controlling, when determining that the channel type is a wired forwarding channel, the earphone module to receive the third transmission data sent by the external device and enter the wired forwarding working mode is specifically as follows:
when the earphone module enters the wired forwarding working mode, receiving, by the earphone module, the third peripheral transmission data of the external device through an earphone-peripheral communication channel, and then forwarding the third peripheral transmission data to the WS module through wired transmission; and
receiving, by the earphone module through the wired transmission, fourth sound pickup data processed by the WS module, and then forwarding the fourth sound pickup data to the external device through the earphone-peripheral communication channel.

9. The method for setting a Bluetooth dual-playing mode according to claim 7, wherein the controlling, when determining that the channel type is a wireless forwarding channel, the earphone module to receive the fourth transmission data sent by the external device and enter the wireless forwarding working mode is specifically as follows:
when the earphone module enters the wireless forwarding working mode, receiving, by the earphone module, the fourth peripheral transmission data of the external device through an earphone-peripheral communication channel, and then forwarding the fourth peripheral transmission data to the WS module through wireless transmission; and
receiving, by the earphone module through the wireless transmission, fifth sound pickup data processed by the WS module, and then forwarding the fifth sound pickup data to the external device through the earphone-peripheral communication channel.

10. A device for setting a Bluetooth dual-playing mode, configured to execute the method for setting a Bluetooth dual-playing mode according to any one of claims 1 to 9.
